# EUROPÄISCHE PATENTSCHRIFT

(11) **EP 3 156 708 B1**
(45) Veröffentlichungstag und Bekanntmachung des Hinweises auf die Patenterteilung: **04.03.2020**
(21) Anmeldenummer: 16192996.3
(22) Anmeldetag: 10.10.2016
(51) Int. Cl.: F16L 11/11, A01N 25/34, F16L 17/025, F16L 17/03, F16L 21/02, F16L 21/03

(54) **ROHRANORDNUNG**
TUBING ASSEMBLY
SYSTÈME DE TUBES

(30) Priorität: 12.10.2015 DE 202015105377 U
(43) Veröffentlichungstag der Anmeldung: 19.04.2017
(73) Patentinhaber: REHAU AG + Co, 95111 Rehau (DE)
(72) Erfinder: Hendel, Roland, 91086 Aurachtal (DE); Sieber, Jürgen, 91074 Herzogenaurach (DE); Kania, Guido, 91080 Marloffstein (DE); Heinlein, Martin, 95100 Selb (DE)

(56) Entgegenhaltungen:
- WO-A1-88/00311
- CH-A- 387 400
- US-A- 5 116 414
- US-A1- 2010 137 141

## Beschreibung

Die Erfindung betrifft eine Rohranordnung zur Aufnahme, zur Speicherung und zum Transport flüssiger und / oder gasförmiger Medien, wobei die Rohranordnungen Rohre und / oder Rohrformteile umfasst, die durch Steckverbindungen miteinander verbunden sind, in denen elastomere Dichtelemente angeordnet sind.

Die Erfindung betrifft weiterhin ein Rohrsystem.

Derartige Rohranordnungen sind in einer Vielzahl und in verschiedenen Ausführungsbeispielen aus dem Stand der Technik bekannt.

Diese Rohranordnungen haben sich in der Praxis gut bewährt. Gleichwohl besteht ständig ein Bedarf, bestimmte Eigenschaften einer derartigen Rohranordnung zu verbessern.

Ein stets Problem ist bei den unterirdisch verlegten Rohranordnungen, die aus Rohren und / oder Rohrformteilen gebaut sind, die durch Steckverbindungen miteinander verbunden sind, dass feine Haarwurzeln in den Ringspalt zwischen dem Dichtelement und der inneren Oberfläche der Muffe, in der das Dichtelement aufgenommen ist, bzw. in den Ringspalt zwischen dem Dichtelement der äußeren Oberfläche des Spitzendes einwachsen. Im Laufe des Wachstums dieser Wurzeln expandieren diese und können den gesamten Ringraum in der Muffe ausfüllen. Dabei kann sich ein derart hoher Druck durch die Wurzeln entwickeln, dass das elastomere Dichtelement verdrängt oder verschoben wird. Das Dichtelement kann dabei von der Dichtfläche in der Muffe oder von der Dichtfläche am Spitzende des in die Muffe eingeschobenen Rohres abgehoben werden. Die Rohrverbindung wird somit undicht, so dass die Wurzeln zusätzlich mit Wasser und ggf. auch Nährstoffen versorgt werden. Die Situation kann derart eskalieren, dass der Rohrleitungsquerschnitt mit Wurzeln zuwächst, so dass der Medientransport in der Rohranordnung eingeschränkt oder unterbunden ist. Dies kann bis zum Bersten der Rohranordnung führen. Der dadurch verursachte Schaden ist hoch, da dies die Neuverlegung der Rohranordnung notwendig macht, verbunden mit hohen Aufwendungen für das Herstellen von Gräben und Oberflächen und den resultierenden Folgearbeiten.

Aus der US 5 116 414 A ist bekannt, Dichtungen aus einem elastomeren Material für Rohrverbindungen bereitzustellen, die zum Zwecke der Verhinderung des Wurzeleinwuchses mit verschiedenen Herbiziden, darunter Derivaten des Dinitroanilins, versetzt sind.

Die Erfindung hat sich die Aufgabe gestellt, die Nachteile des Standes der Technik zu überwinden und eine Rohranordnung bereitzustellen, die kostengünstig und wirtschaftlich herstellbar ist, bei der die Materialeigenschaften insgesamt erhalten bleiben, und bei der ein wirksamer Schutz gegen den Bewuchs bzw. das Einwachsen von Wurzeln am Dichtelement vorliegt.

Eine weitere Aufgabe der Erfindung besteht darin, ein Rohrsystem anzugeben, das eine Rohranordnung umfasst, die die vorstehend geschilderten Nachteile überwindet. Erfindungsgemäß wird die erste Aufgabe durch die kennzeichnenden Merkmale des Anspruches 1 gelöst.

Weitere die Erfindung detailliert beschreibende und ergänzende Merkmale sind in den Unteransprüchen ausgeführt.

Durch das Vorsehen der radizid wirkenden Substanz, die der Werkstoff des Dichtelements eingelagert enthält, wird das Wurzelwachstum im Bereich des Dichtelements unterbunden bzw. derart signifikant reduziert, dass es in der Folge zu keinen durch Wurzeleinwuchs verursachten Beeinträchtigungen und Schäden im Bereich der Rohrverbindungen kommt. Die erfindungsgemäße Rohranordnung zeichnet sich weiterhin dadurch aus, dass der Werkstoff des Dichtelements über seinen gesamten Querschnitt in räumlich ungleichmäßiger Verteilung die wenigstens eine radizid wirkende Substanz eingelagert enthält.

Durch feine über den gesamten Querschnitt des Dichtelements im Werkstoff gleichmäßig verteilten radizid wirkenden Substanz ist ein derartiges Dichtelement in einfache Weise herstellbar, indem ein entsprechend ausgerüsteter Werkstoff zum Dichtelement geformt wird. Dies kann beispielsweise in einem Pressverfahren, einem Extrusionsverfahren oder einem Spritzgussverfahren erfolgen.

Ein solches Dichtelement weist an seiner gesamten Oberfläche eine radizide Wirkung auf. Soweit die radizide Wirkung an der Oberfläche des Dichtelements nachlässt, indem dieses beispielsweise ausgewaschen wird, abbaut oder sich anderweitig vermindert kann weitere radizid wirkende Substanz aus dem Innern des Werkstoffs an die Oberfläche wandern und so die radizide Wirkung aufrecht erhalten.

Nach der Erfindung ist vorgesehen, dass das Dichtelement in räumlich ungleichmäßiger Verteilung die wenigstens eine radizid wirkende Substanz eingelagert enthält.

Hierbei kann das Dichtelement derart gestaltet sein, dass nur die Abschnitte, die einen Kontakt nach außen hin, also zu dem Ort von dem aus Wurzeleinwuchs möglich ist, aufweisen, mit der radizid wirkende Substanz ausgestattet sind.

Es kann auch eine Ausführungsform vorliegen, bei der nur die Oberflächenschicht des Dichtelements die radizid wirkende Substanz eingelagert enthält.

Durch die vorliegende Erfindung kann in vorteilhafter Weise erreicht werden, dass im Ringraum zwischen den freien Enden der Rohranordnungen und am Dichtelement selbst kein Wurzelbewuchs stattfindet bzw. ein solcher massiv reduziert wird.

Gemäß vorliegender Erfindung ist die radizid wirkende Substanz ein Derivat einer Carbonsäure ist, insbesondere Methylchlorphenoxyessigsäure und / oder Methylchlorphenoxypropionsäure und / oder deren Ester und / oder deren Salze.

Derartige Derivate von Carbonsäuren, insbesondere von Methylchlorphenoxyessigsäure und / oder von Methylchlorphenoxypropionsäure zeichnen sich dadurch aus, dass sie hochwirksam den Wuchs von Wurzeln verhindern, indem diese zumindest teilweise verholzen und absterben.

Von besonderem Vorteil ist die erfindungsgemäße Rohranordnung, wenn die wenigstens eine radizid wirkende Substanz zu 0,05 bis 5 Gew.-%, bevorzugt zu 0,5 bis 2,5 Gew.-% im Werkstoff des Dichtelements vorhanden ist.

Auf diese Weise wird Wurzelbewuchs auf dem Dichtelement vermieden bzw. erheblich vermindert.

Die mechanischen Eigenschaften des Werkstoffs des Dichtelements bleiben erhalten, was außerordentlich wichtig für das ordnungsgemäße Funktionieren eines solchen Dichtelements ist.

In einer bevorzugten Ausführungsform der vorliegenden Erfindung ist die Rohranordnung derart gestaltet, dass der Werkstoff des Dichtelements eine herbizid und / oder biozid wirkende Substanz, insbesondere eine solche, die Metallionen abgibt, enthält.

Als herbizid und / oder biozid wirkende Substanzen sind im Rahmen der vorliegenden Erfindung einsetzbar:
Aminosäurederivate, z. B. Glyphosat
Acetamine, z. B. Alachlor
Carbamate
Harnstoffderivate, z. B. Isoproturon oder Diuron
Sulfonylharnstoffe
Triazine, z. B. Atrazin oder Simazin oder Terbutylazin
Pyridine
Metalle und Metallionen, z. B. Kupfer und Kupferionen.

Der Werkstoff des Dichtelements der erfindungsgemäßen Rohranordnung enthält weiterhin in einer bevorzugten Ausführungsform eine Substanz, die Metallionen abgibt.

Bei der erfindungsgemäßen Rohranordnung werden die Metallionen beispielsweise durch den Kontakt mit einer Flüssigkeit, insbesondere beim der Benetzung des Dichtelements der Rohranordnung, freigesetzt.

Als Metallionen abgebende Substanz kann dazu ein Metallsalz, ein Metalloxid, ein Metallcarbid, eine metallorganische Verbindung oder eine metallhaltiger Zeolith ausgewählt sein, wobei die Metallionen solche des Silbers, des Goldes, des Kupfers, des Zinks, des Bleis und / oder des Arsens sind.

Als Zeolithe sind sowohl natürlich vorkommende als auch industriell hergestellte Zeolithe geeignet.

Ein Teil der im Zeolith enthaltenen Metallionen ist bei der erfindungsgemäßen Lösung durch wenigsten eine Art von Metallionen ersetzt, die aus der Gruppe Silber, Gold, Kupfer, Zink, Blei, Arsen ausgewählt sind.

Die erfindungsgemäße Rohranordnung weist damit eine signifikante herbizide und / oder biozide Wirkung gegenüber Organismen auf.

Das Dichtelement kann im Rahmen der vorliegenden Erfindung mit einer Beschichtung versehen sein, die wenigstens ein radizid wirkendes Material in einer Menge von 0,05 bis zu 20 % Gew.-% bezogen auf die Gesamtmasse der Beschichtung, eingelagert enthält.

Diese Beschichtungen sind als härtende, insbesondere UV-härtende Beschichtung, die beispielsweise auf Polyacrylat oder Polyurethan basieren, vorteilhaft einsetzbar.

Es ist auch möglich, die Beschichtung durch einen Bedampfungsprozess auf das Dichtelement aufzubringen.

Es hat sich als vorteilhaft herausgestellt, dass bei der erfindungsgemäßen Rohranordnung der Werkstoff des Dichtelements ein Silikonkautschuk, ein natürlicher und / oder synthetischer Kautschuk, ein Styrol-Butadien-Kautschuk, ein Chloropren-Kautschuk, ein weichgemachtes Polyvinylchlorid, ein thermoplastisches Elastomer, ein Ethylen-Propylen-Dien-Mischpolymerisat und dergleichen sein kann. Die vorgenannten Werkstoffe können auch kombiniert in dem Dichtelement vorliegen.

In den vorgenannten Werkstoffen lässt sich die radizid wirkende Substanz in der oben genannten Menge leicht einarbeiten und verteilen.

Aus dem so erhaltenen radizid wirkenden Werkstoff kann ein Dichtelement hergestellt werden bzw. ein Abschnitt eines Dichtelements.

Ein solches Dichtelement gemäß vorliegender Erfindung, das radizid wirkt, kann zur Unterscheidung von Dichtelementen, die nicht radizid wirken, mit Vorteil eingefärbt sein.

Hierzu wird dem Werkstoff, aus dem das Dichtelement besteht, bzw. den es enthält, ein Pigment oder ein Farbstoff beigegeben. Auf diese Weise kann leicht ein gefärbtes Dichtelement hergestellt werden. Dies kann so leicht unterschieden werden von einem nicht radizid wirkenden Dichtelement.

Es versteht sich auch, dass die Variation an Dichtelementen gemäß der vorliegenden Erfindung groß ist, so ist es möglich, dass das Dichtelement ein- oder mehrteilig gebildet ist, es kann über einen oder mehrere Hohlräume verfügen, es kann mit Stabilisierungselementen ausgerüstet sein, es kann vielfältige Formen aufweisen, wie beispielsweise einen runden, ovalen, eckigen oder anders gestalteten Querschnitt zeigen, es kann Wülste, Lippen, Vorsprünge, Halteabschnitte, Riffelungen, Oberflächenaufrauhungen und anderes mehr aufweisen.

Alle diese Ausgestaltungen sind bei einem Dichtelement, das radizid wirksam ist, möglich.

Vorteilhaft kann bei Rohranordnungen, welche mit den vorstehend genannten Nachteilen des bekannten Standes der Technik behaftet sind, eine kostengünstige "Sanierung" realisiert werden, die zu den gleichen Vorteilen wie eine ursprünglich montierte erfindungsgemäße Rohranordnung führt, indem ein erfindungsgemäßes Dichtelement in der Rohranordnung angeordnet wird.

Im Folgenden soll an den die Erfindung nicht einschränkenden Beispielen diese näher beschrieben werden.

### Beispiel 1:

Die erfindungsgemäße Rohranordnung weist auf:

| | | |
|---|---|---|
| ein Rohr, enthaltend Polypropylen | | |
| mit einem Dichtelement in einer Nut der Muffe am Rohr, das aus | | |
| 99 | Gew.-% | Gummi |
| 1 | Gew.-% | Methylchlorphenoxyessigsäure besteht. |

### Beispiel 2:

Die erfindungsgemäße Rohranordnung weist auf:

| | | |
|---|---|---|
| ein Rohr, enthaltend Polyvinylchlorid | | |
| mit einem Dichtelement in einer Nut der Muffe am Rohr, das aus | | |
| 98,5 | Gew.-% | Styrol-Butadien-Kautschuk |
| 1,5 | Gew.-% | Methylchlorphenoxypropionsäureethylester besteht. |

### Beispiel 3:

Die erfindungsgemäße Rohranordnung weist auf:

| | | |
|---|---|---|
| ein Rohr, enthaltend Polyethylen | | |
| mit einem Dichtelement Dichtelement in einer Nut der Muffe am Rohr, das aus | | |
| 99 | Gew.-% | Chloropren-Kautschuk |
| 1 | Gew.-% | Methylchlorphenoxypropionsäurebutylester besteht. |

Bei allen drei Beispielen kann im Vergleich mit Dichtelementen, die nicht radizid wirksam sind, eine komplette oder nahezu komplette Unterdrückung des Wurzelwachstums im Bereich der Dichtelemente nachgewiesen werden.

Die vorliegende Erfindung ist für den Einsatz bei Rohranordnungen, die Rohre und / oder Rohrformteile umfassen, die durch Steckverbindungen miteinander verbunden sind, in denen elastomere Dichtelemente angeordnet sind, von großem Vorteil.

Im vorliegenden Erfindungszusammenhang kann ein solches Rohrformteil beispielsweise ein Rohrabschnitt, ein Rohrbogen, ein Rohrverbindungsstück, ein Reduzierstück, ein Y-Stück, ein T-Stück, ein Rohrreinigungsformteil, ein Rohrstopfen oder ein anderes Formteil sein.

Es gelingt damit, das Einwachsen von Wurzeln zu verhindern bzw. signifikant zu vermindern, der Medientransport durch die Rohranordnung wird durch einwachsende Wurzeln nicht behindert, es treten keine Undichtigkeiten an den Steckverbindungen auf, die zur Exfiltration von Medien, wie beispielsweise Abwasser, in das umgebende Erdreich führen, ebenso wird die Infiltration von Grundwasser aus dem Erdreich in die Rohranordnung unterbunden, die Rohranordnung weist auf diese Weise eine hohe Lebensdauer auf, wobei kein nennenswerter Wartungsaufwand notwendig ist, insbesondere kann es zu keiner Zerstörung der Rohranordnung durch Wurzeleinwuchs kommen. Dadurch können Kommunen und Netzbetreiber Kosten einsparen, da Wartungs-, Reinigungs- und Reparaturarbeiten, wie beispielsweise das Wurzelschneiden, die optische Inspektion und die Reinigung des Inneren der Rohranordnung, nicht notwendig sind.

Die weitere Aufgabe der vorliegenden Erfindung, ein Rohrsystem anzugeben, das eine Rohranordnung umfasst, die die vorstehend geschilderten Nachteile überwindet, findet ihre Lösung in Anspruch 8. Im Rahmen der vorliegenden Erfindung wurde erkannt, dass ein Rohrsystem dann vorteilhaft hinsichtlich des Einwuchses von Wurzeln ausgestaltet ist, wenn eine Rohranordnung, wie vorstehend beschrieben, genutzt wird, das Rohrsystem zu bilden. Durch eine solche erfindungsgemäße Rohranordnung wird ein Rohrsystem in ganz besonderer Weise technisch aufgewertet. Daraus resultieren dann die vorstehend beschriebenen Vorteile.

Ein solches Rohrsystem kann neben der Rohranordnung beispielsweise noch Auf- und Abgabeeinrichtungen sowie Speicher für Fluide, Schächte, Gerinne, Reinigungseinrichtungen, Hebeeinrichtungen, und dergleichen umfassen.

Anwendung findet die Erfindung überall dort, wo aus Rohren bzw. Rohrformteilen und weiteren Bauelementen Rohranordnung und daraus Rohrsysteme gebaut werden. Die Erfindung ist besonders hilfreich bei den im Boden unvermeidbar auftretenden Wurzelwuchs, der durch die erfinderischen Maßnahmen im Bereich der Dichtelemente so vermieden bzw. deutlich reduziert werden kann.

Es ergeben sich so Anwendungen der vorliegenden Erfindung insbesondere im Bereich der drucklosen Leitungen zur Aufnahme, Leitung und Speicherung von Fluiden. Dies betrifft in erster Linie Systeme für die Abwasser- und solche für die Regenwasserbewirtschaftung. Aber auch in anderen Bereichen, wie beispielsweise der Schwimmbadtechnik, der Landwirtschaft, der Teichwirtschaft und in anderen Anwendungsfeldern kann die Erfindung vorteilhaft genutzt werden.

Weitere wichtige Merkmale und Vorteile der Erfindung ergeben sich aus den Unteransprüchen, aus den Figuren und aus der zugehörigen Figurenbeschreibung.

Bevorzugte Ausführungsbeispiele der Erfindung sind in den Fig. dargestellt und werden in der nachfolgenden Beschreibung näher erläutert.

Hierzu zeigt
- Fig. 1: eine Querschnittsansicht eines Dichtelements in der Nut einer Muffe eines Rohres;

- Fig. 2: eine Querschnittsansicht eines Dichtelements in der Nut einer Muffe eines Rohres in einer Ausführungsform gemäß vorliegender Erfindung.

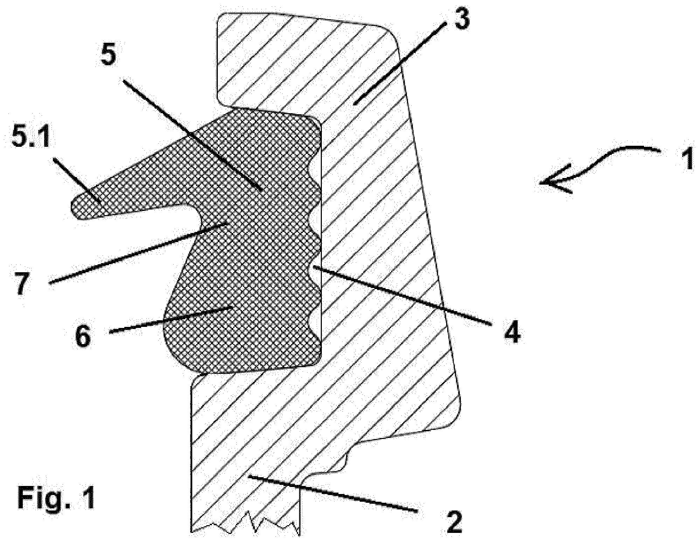

In Fig. 1 ist in einer Querschnittsansicht ein Dichtelement 5 in der Nut 4 einer Muffe 3 eines Rohres 1 als Beispiel gezeigt.

Das Rohr 1 weist einen Endabschnitt 2 auf, an dessen Ende das Rohr 1 zu einer Muffe 3 aufgeweitet ist. An der Innenoberfläche der Muffe 3 ist eine Nut 4 ausgebildet, in der ein Dichtelement 5 angeordnet ist. Das Dichtelement 5 ist aus einem Werkstoff 7 gebildet.

Der Werkstoff 7 des Dichtelements 5 enthält über seinen gesamten Querschnitt in räumlich gleichmäßiger Verteilung die radizid wirkende Substanz 6 - in kreuzschraffierter Darstellung - eingelagert.

Das Dichtelement 5 ist derart bemessen, dass es in der Nut 4 komprimiert wird, wenn ein in der Fig. 1 nicht gezeigtes Spitzende eines Rohres oder Rohrformteils in die Muffe 3 eingeschoben wird. Das Dichtelement 5 legt sich dann an einen Oberflächenabschnitt der Muffe 3 und einen Oberflächenabschnitt des Spitzendes des eingeschobenen Rohres an und dichtet die so geschaffene Verbindung ab.

An dem im Verbindungszustand von außen frei liegenden Abschnitt des Dichtelements 5 wird Wurzelbewuchs durch die im Werkstoff 7 des Dichtelements 5 enthaltene radizid wirkende Substanz 6 verhindert.

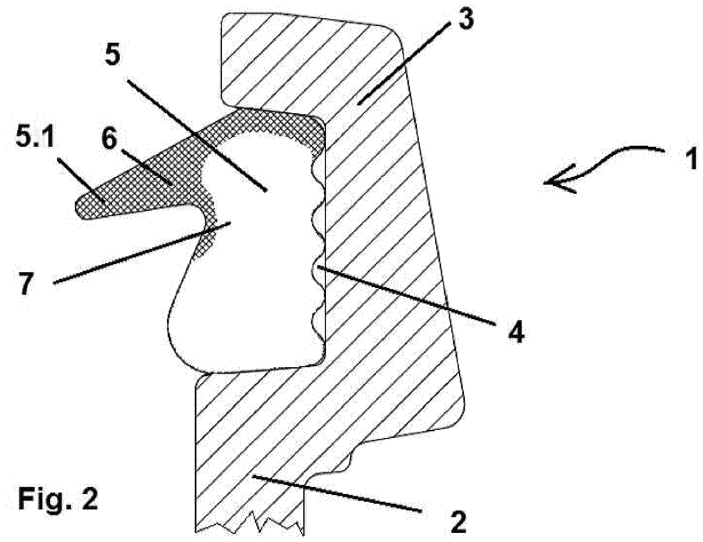

In Fig. 2 ist in einer Querschnittsansicht ein Dichtelement 5 in der Nut 4 einer Muffe 3 eines Rohres 1 in einer Ausführungsform gemäß vorliegender Erfindung gezeigt.

Die Bezugszeichen entsprechend denen aus Fig.1, auf die hier explizit verwiesen wird.

Der Werkstoff 7 des Dichtelements 5 enthält die radizid wirkende Substanz 6 nur in einem Abschnitt eingelagert.

Bei der vorliegenden Ausführungsform der Erfindung ist der Abschnitt des Dichtelements 5, der zum Ende mit der Öffnung des Rohres 1 hinweist, die Lippe 5.1 und der an die Lippe 5.1 beidseitig angrenzende Bereich mit der radizid wirkende Substanz 6 - in kreuzschraffierter Darstellung - im Werkstoff 7 versehen.

Der Rest des Werkstoffs 7 des Dichtelements 5 enthält keine radizid wirkende Substanz 6. Auch hier verhindert die im Werkstoff 7 des Dichtelements 5 enthaltene radizid wirkende Substanz 6 im Verbindungszustand am außen frei liegenden Abschnitt des Dichtelements 5 den Wurzelbewuchs.

### Bezugszeichenliste

- 1: Rohr
- 2: Rohrendabschnitt
- 3: Muffe
- 4: Nut
- 5: Dichtelement
- 5.1: Lippe
- 6: radizid wirkende Substanz
- 7: Werkstoff
- 8: Rohranordnung
- 9: Rohrsystem

## Patentansprüche

1. Rohranordnung (8) zur Aufnahme, zur Speicherung und zum Transport flüssiger und / oder gasförmiger Medien oder zur Aufnahme von Energie und / oder Signalleitungen, wobei die Rohranordnung (8) Rohre (1) und / oder Rohrformteile umfasst, die durch Steckverbindungen miteinander verbunden sind, in denen Dichtelemente (5) angeordnet sind, wobei der Werkstoff (7) des Dichtelements (5), der wenigstens teilweise ein elastischer Werkstoff ist, insbesondere ein Silikonkautschuk und / oder ein natürlicher und / oder synthetischer Kautschuk und / oder ein Styrol-Butadien-Kautschuk und / oder ein Chloropren-Kautschuk und / oder ein weichgemachtes Polyvinylchlorid und / oder ein thermoplastisches Elastomer und / oder ein Ethylen-Propylen-Dien-Mischpolymerisat, wenigstens eine radizid wirkende Substanz (6) eingelagert enthält, **dadurch gekennzeichnet, dass** der Werkstoff (7) des Dichtelements (5) über seinen gesamten Querschnitt in räumlich ungleichmäßiger Verteilung die wenigstens eine radizid wirkende Substanz (6) eingelagert enthält.

2. Rohranordnung (8) nach Anspruch 1, **dadurch gekennzeichnet, dass** die radizid wirkende Substanz (6) ein Derivat einer Carbonsäure ist, insbesondere Methylchlorphenoxyessigsäure und / oder Methylchlorphenoxypropionsäure und / oder deren Ester und / oder deren Salze.

3. Rohranordnung (8) nach einem der Ansprüche 1 oder 2, **dadurch gekennzeichnet, dass** die wenigstens eine radizid wirkende Substanz (6) zu 0,05 bis 5 Gew.-%, bevorzugt zu 0,5 bis 2,5 Gew.-% im Werkstoff (7) des Dichtelements (5) vorhanden ist.

4. Rohranordnung (8) nach einem der vorangehenden Ansprüche, **dadurch gekennzeichnet, dass** der Werkstoff (7) des Dichtelements (5) eine herbizid und / oder biozid wirkende Substanz enthält.

5. Rohranordnung (8) nach Anspruch 4, **dadurch gekennzeichnet, dass** die herbizid und / oder biozid wirkende Substanz derart gewählt ist, dass diese Metallionen abgibt.

6. Rohranordnung (8) nach Anspruch 5, **dadurch gekennzeichnet, dass** die Metallionen abgebende Substanz aus einem Metallsalz, einem Metalloxid, einem Metallcarbid, einer metallorganischen Verbindung oder einem metallhaltigen Zeolith ausgewählt ist, wobei die Metallionen solche des Silbers, des Goldes, des Kupfers, des Zinks, des Bleis und / oder des Arsens sind.

7. Rohranordnung (8) nach einem der vorangehenden Ansprüche, **dadurch gekennzeichnet, dass** das Dichtelement (5) ein- oder mehrteilig gebildet ist und / oder über einen oder mehrere Hohlräume verfügt und / oder ein oder mehrere Stabilisierungselemente aufweist und / oder einen runden, ovalen, eckigen oder anders gestalteten Querschnitt besitzt und / oder Wülste, Lippen, Vorsprünge, Halteabschnitte, Riffelungen oder Oberflächenaufrauhungen aufweist.

8. Rohrsystem (9) mit wenigstens einer Rohranordnung (8) nach einem der Ansprüche 1 bis 7.

## Claims

1. Pipe assembly (8) for receiving, storing and transporting liquid and/or gaseous media or for receiving energy and/or signal lines, wherein the pipe assembly (8) comprises pipes (1) and/or pipe moulded parts, which are connected to one another by means of plug connections in which sealing elements (5) are arranged, wherein the material (7) of the sealing element (5), which is at least partly an elastic material, in particular a silicone rubber and/or a natural and/or synthetic rubber and/or a styrene-butadiene rubber and/or a chloroprene rubber and/or a plasticised polyvinyl chloride and/or a thermoplastic elastomer and/or an ethylene-propylene-diene copolymer, contains at least one embedded substance (6) of root-growth-inhibiting effect, **characterised in that** the material (7) of the sealing element (5) contains the at least one substance (6) of root-growth-inhibiting effect embedded over its entire cross section in a spatially uneven distribution.

2. Pipe assembly (8) according to claim 1, **characterised in that** the substance (6) of root-growth-inhibiting effect is a derivate of a carboxylic acid, in particular methyl chlorophenoxyacetic acid and/or methyl chlorophenoxy propionic acid and/or their esters and/or their salts.

3. Pipe assembly (8) according to one of claims 1 or 2, **characterised in that** the at least one substance (6) of root-growth-inhibiting effect is present in an amount of 0.05 to 5 percent by weight, preferably 0.5 to 2.5 percent by weight in the material (7) of the sealing element (5).

4. Pipe assembly (8) according to any one of the preceding claims, **characterised in that** the material (7) of the sealing element (5) contains a substance of herbicide and/or biocide effect.

5. Pipe assembly (8) according to claim 4, **characterised in that** the substance of herbicide and/or biocide effect is selected such that this emits metal ions.

6. Pipe assembly (8) according to claim 5, **characterised in that** the substance emitting metal ions is selected from a metal salt, a metal oxide, a metal carbide, an organometallic compound or a metal-containing zeolite, wherein the metal ions are such as of silver, of gold, of copper, of zinc, of lead and/or of arsenic.

7. Pipe assembly (8) according to any one of the preceding claims, **characterised in that** the sealing element (5) is formed in one or more parts and/or has one or more cavities and/or has one or more stabilising elements and/or has a round, oval, square or otherwise shaped cross section and/or has beads, lips, projections, retaining sections, corrugations or surface roughening.

8. Pipe system (9) having at least one pipe assembly (8) according to any one of claims 1 to 7.

## Revendications

1. Agencement de tubes (8) destiné à recevoir, à stocker et à transporter des milieux liquides et/ou gazeux ou à recevoir de l'énergie et/ou des lignes de signaux, l'agencement de tubes (8) comprenant des tubes (1) et/ou des pièce moulées tubulaires, qui sont reliés les uns aux autres par des assemblages à emboîtement, dans lesquels des éléments d'étanchéité (5) sont disposés, le matériau (7) de l'élément d'étanchéité (5), qui est au moins partiellement un matériau élastique, en particulier un caoutchouc silicone et/ou un caoutchouc naturel et/ou synthétique et/ou un caoutchouc styrène-butadiène et/ou un caoutchouc chloroprène et/ou un polychlorure de vinyle plastifié et/ou un élastomère thermoplastique et/ou un copolymère éthylène-propylène-diène, contenant incorporée dans celui-ci au moins une substance (6) à effet inhibant la croissance racinaire, **caractérisé en ce que** le matériau (7) de l'élément d'étanchéité (5) contient incorporée dans celui-ci l'au moins une substance (6) à effet inhibant la croissance racinaire dans une répartition spatiale inégale sur toute sa section transversale.

2. Agencement de tubes (8) selon la revendication 1, **caractérisé en ce que** la substance (6) à effet inhibant la croissance racinaire est un dérivé d'un acide carboxylique, en particulier de l'acide méthylchlorophénoxyacétique et/ou de l'acide méthylchlorophénoxypropionique et/ou leurs esters et/ou leurs sels.

3. Agencement de tubes (8) selon l'une des revendications 1 ou 2, **caractérisé en ce que** l'au moins une substance (6) à effet inhibant la croissance racinaire est présente dans le matériau (7) de l'élément d'étanchéité (5) à raison de 0,05 à 5 % en poids, de préférence 0,5 à 2,5 % en poids.

4. Agencement de tubes (8) selon l'une des revendications précédentes, **caractérisé en ce que** le matériau (7) de l'élément d'étanchéité (5) contient une substance à effet herbicide et/ou biocide.

5. Agencement de tubes (8) selon la revendication 4, **caractérisé en ce que** la substance à effet herbicide et/ou biocide est choisie de telle manière que celle-ci cède des ions métalliques.

6. Agencement de tubes (8) selon la revendication 5, **caractérisé en ce que** la substance cédant des ions métalliques est choisie parmi un sel métallique, un oxyde métallique, un carbure métallique, un composé organométallique ou une zéolithe contenant du métal, les ions métalliques étant ceux de l'argent, de l'or, du cuivre, du zinc, du plomb et/ou de l'arsenic.

7. Agencement de tubes (8) selon l'une des revendications précédentes, **caractérisé en ce que** l'élément d'étanchéité (5) est formé en une ou en plusieurs pièces et/ou dispose d'une ou de plusieurs cavités et/ou comporte un ou plusieurs éléments stabilisateurs et/ou possède une section transversale ronde, ovale, polygonale ou d'une autre forme et/ou comporte des renflements, des lèvres, des saillies, des parties de retenue, des cannelures ou des rugosités de surface.

8. Système de tubes (9) comprenant au moins un agencement de tubes (8) selon l'une des revendications 1 à 7.
